# FASCICULE DE BREVET EUROPEEN

(11) **EP 0 427 776 B1**
(45) Date de publication et mention de la délivrance du brevet: **03.03.1993**
(21) Numéro de dépôt: 89909202.7
(22) Date de dépôt: 21.07.1989
(51) Int. Cl.: G06F 15/68

(54) **PROCEDE POUR AUTOMATISER LA MISE EN CONCORDANCE DE COUPES SERIEES OBSERVEES AU MICROSCOPE**
VERFAHREN ZUR AUTOMATISIERUNG DER KORRELATION DER IM MIKROSKOP BEOBACHTETEN SERIELLEN SCHICHTEN
METHOD FOR AUTOMATICALLY MATCHING SERIATED CROSS-SECTIONS OBSERVED WITH A MICROSCOPE

(30) Priorité: 27.07.1988 CH 2860/88
(43) Date de publication de la demande: 22.05.1991
(73) Titulaire: LAUNAY, Didier, F-78100 Saint-Germain-en-Laye (FR); BRON, Christophe, CH-8044 Zürich (CH)
(72) Inventeur: LAUNAY, Didier, F-78100 Saint-Germain-en-Laye (FR); BRON, Christophe, CH-8044 Zürich (CH)
(74) Mandataire: Gérardin, Robert Jean René
(86) Numéro de dépôt international: FR8900386
(87) Numéro de publication internationale: WO9001197

(56) Documents cités:
- FR-A- 2 074 514
- GB-A- 2 046 940
- 4ième Congres "Reconnaissance des formes et intelligence artificielle", Paris, 25-27 janvier 1984, tome 1, AFCET, (Paris,FR), M. Fortin: "Recalage d'images multisources", pages 481-491.
- Onzième Colloque sur le Traitement du signal et des Images, Nice, 1-5 juin 1987. GRETSI, V. Leclerc et al.: "Recalage élastique d'images angiographiques", pages 487-489.

## Description

La présente invention concerne un procédé permettant d'automatiser le calcul de fonctions de déformation qui rendent possible la mise en concordance de coupes sériées de microscopie: microscopie électronique à transmission et microscopie optique.

Les séries d'images peuvent être repérées de façon facultative et indépendante de la présente invention, soit par séries, soit les unes par rapport aux autres au sein d'une même série, en mettant en oeuvre la méthode telle que décrite dans l'invention GB-A- 2 046 940.

La mise en concordance de coupes sériées est traditionnellement réalisée par déplacement des images et jugement de l'opérateur.
Cette façon de faire ne permet pas de corriger les déformations que l'action mécanique des instruments de découpe fait subir aux coupes fines.

Or, plusieurs déformations sont liées aux techniques employées pour permettre la visualisation de coupes sériées en microscopie.
- une translation et une rotation dues à la dépose non exactement reproductible des coupes les unes à la suite des autres au sein des grilles ou des lames de support .
- des déformations liées à l'action mécanique du microtome ou de l'ultramicrotome.
- une rotation systématique liée aux différentes puissances d'agrandissement (dans le cas d'un microscope électronique en mode de transmission).

L'état de la technique, tel que décrit dans :
4ième Congrès "Reconnaissance des formes et intelligence artificielle", Paris (FR), 25-27 janvier 1984, tome 1, AFCET; M. FORTIN : "Recalage d'images multisources", pages 481-491,
classe les déformations entre deux images en deux catégories: les déformations où un modèle polynomial global peut être appliqué à l'ensemble de l'image, et les déformations où seul un modèle local peut être appliqué de proche en proche.

La présente invention traite de déformation d'images de la première classe, où un modèle polynomial de type affine du premier ordre à six paramètres peut être appliqué à l'ensemble de l'image.

Par le calcul d'une fonction de transformation inverse et l'établissement d'un repère fixe déduit des marquages préalablement obtenus mécaniquement ou par des tirs au laser à impulsion, le procédé selon l'invention permet de corrige, entre deux images, toutes les déformations liées aux techniques de microscopie.

Le procédé selon l'invention se déroule après l'étape de préparation histologique, préable à l'observation au microscope optique ou au microscope électronique à transmission.

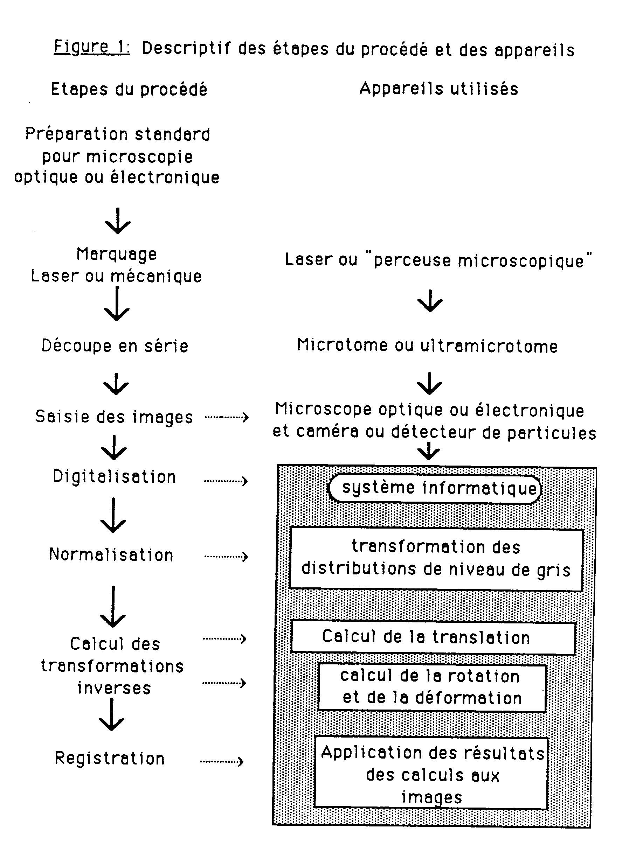

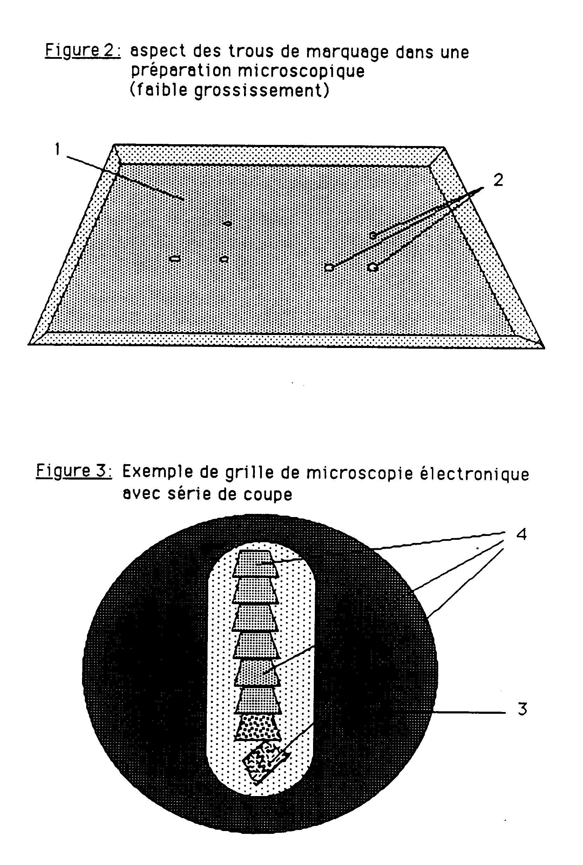

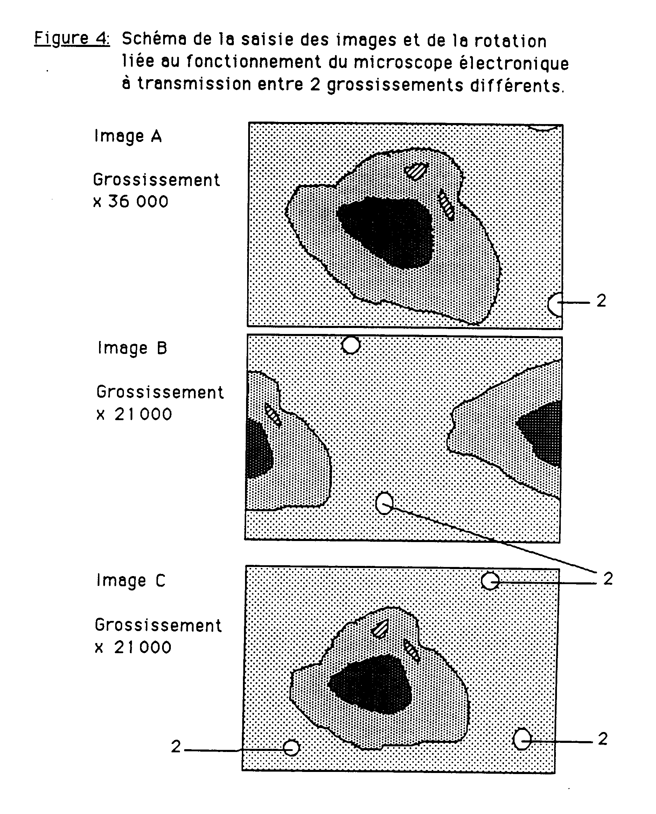

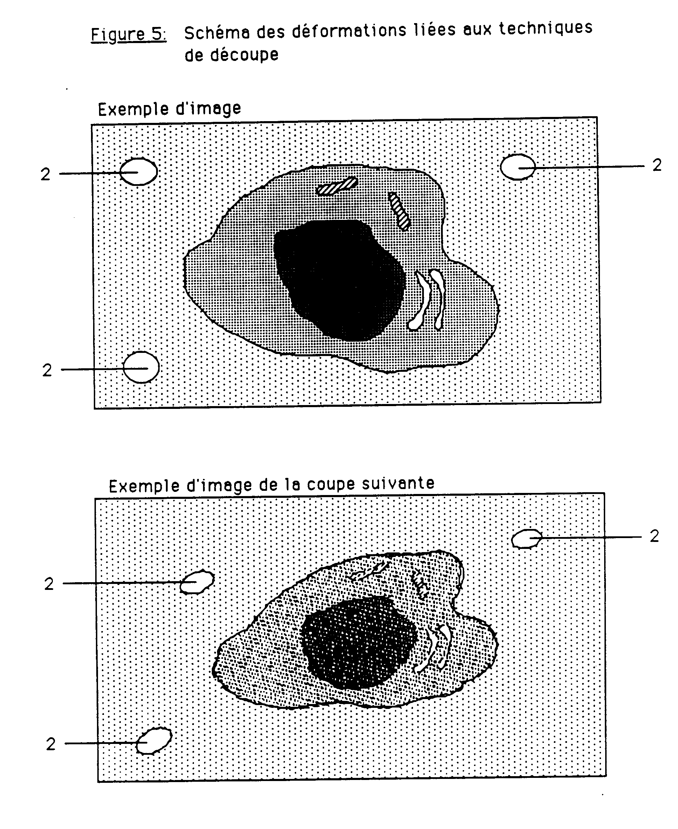

Le procédé selon l'invention comprend plusieurs étapes:
(Cf figure 1)
1. "Marquage":
   Le procédé selon l'invention comprend une étape de préparation de l'échantillon avant la découpe en série (cf figure 2).
   On perce la préparation microscopique (1) près des zones à étudier par 3 trous (2) disposés de façon non rectiligne et percés soit mécaniquement soit au moyen d'un laser à impulsion.
   Les barycentres de ces trous (2) serviront de points de repères pour l'établissement d'un repère fixe et le calcul ultérieur des fonctions de transformation inverses des coupes par rapport à une coupe de référence considérée comme non déformée (par exemple, une coupe épaisse).
2. "Découpe en série":
   Le procédé selon l'invention reprend l'étape classique de coupes sériées (4) de la préparation à l'aide d'un microtome, pour les coupes à visualiser en microscopie optique, et d'un ultramicrotome pour les coupes à visualiser avec un microscope électronique (cf figure 3).
3. "Saisie digitalisation":
   Le procédé selon l'invention comprend les étapes d'observation au microscope optique ou au microscope électronique à transmission, ainsi que de saisie, de digitalisation, de stockage et de traitement des images par un système informatique. Pour une image à étudier, 3 images sont saisies:
   (cf figure 4)
   - Image A:: l'image que l'on veut étudier.
   - Image B:: une image obtenue à un plus faible grossissement, sans bouger le porte-objet (3) et permettant de visualiser au moins un des trous de marquage (2).
   - Image C:: Une image permettant de visualiser tous les trous (2) de marquage, au même grossissement que pour l'image B.
4. "Normalisation":
   Une étape de normalisation par traitement numérique de toutes les images A des coupes à étudier, permettant d'obtenir une information homogène en terme de contraste et de distribution des niveaux de gris. Les histogrammes des niveaux de gris des images sont normalisés au sens de leur moyenne et de leur variance.
   Le réhaussement est effectué par étalement d'histogramme.
   Des fonctions mathématiques spécifiques sont utilisées pour les travaux sur les histogrammes (amélioration et stabilisation).
5. "Calcul de la transformation inverse":
   Le procédé selon l'invention comprend une étape de calcul de fonctions de transformation inverses, permettant de rétablir, de proche en proche, à partir d'une première coupe considérée en référence, un repère qui soit fixe pour toutes les coupes. On opère comme suit:
   5.1 Le calcul automatique de la translation entre les images B et C qui comprend:
      5.1.1. Détection automatique des trous (2) par méthodes d'analyse d'image (seuillage) sur les images B et C.
      5.1.2. Calcul des barycentres des trous (2) de l'image C.
      5.1.3. Calcul des barycentres du ou des trous de l'image B.
      5.1.4. Superposition des barycentres correspondants.
      5.1.5. Calcul de la translation nécessaire entre les 2 images par calcul de la distance des 2 barycentres sur les images respectives.
   5.2. Calcul de la rotation et de la déformation (cf figure 5)
      Ces deux fonctions sont à appliquer à l'image A courante par rapport à l'image A de référence. Elles permettent la mise automatique en registre virtuel de la série des images A.
      5.2.1. Calcul de la rotation.
         Le calcul de la rotation est obtenu par la somme angulaire de la rotation liée au fonctionnement de l'appareil spécifique à chaque grossissement et de la rotation liée à l'orientation aléatoire de la coupe dans le porte-objet (3) du microscope. La fonction liée à l'appareil est donnée par avance; celle de la position de la coupe est calculée en fonction de l'orientation des trous (2) dans l'image C.
      5.2.2. Calcul de la déformation:
         Connaissant la position des trous (2) avant la découpe et leurs distances respectives, le calcul des déformations inverses à appliquer aux images successives, afin de mettre en registre les trous (2) et, par conséquent, les images qui leurs sont coordonnées, utilise un modèle matriciel appliqué à l'ensemble de l'image, déjà expérimenté dans les phases antérieures et qui, jusqu'ici, reste suffisant, à savoir:
         une transformation affine du premier ordre à 6 paramètres.
6. "Registration"
   Une étape de registration des images est obtenue par traitement numérique en appliquant, aux images A, la suite de fonctions de transformation ainsi que les rotations et translations calculées selon le procédé de l'invention décrit dans l'étape 5 précédente.

Le procédé selon l'invention est particulièrement adapté à la reconstruction de l'information en trois dimensions, à partir de coupes sériées (4) observées au microscope électronique à transmission ou au microscope optique. L'information peut ensuite être exploitée en utilisant toutes les techniques de traitement numérique des images.

Le procédé selon l'invention permet d'automatiser la recherche de zones d'une coupe sur l'autre au sein de coupes sériées observées à l'aide de microscopes électroniques à transmission, dont les déplacements de la platine porte-objet et les paramètres de contrôles sont gérés par ordinateur.

Le procédé selon l'invention permet d'automariser la recherche de zones d'une coupe sur l'autre au sein de coupes sériées observées à l'aide de microscopes optiques, dont les déplacements de la platine porte-objet et les paramètres de contrôles sont gérés par ordinateur.

## Revendications

1. Procédé de mise en concordance de coupes sériées (4) observées au microscope (électronique à transmission ou optique) caractérisé par:
a - un marquage des préparations avant découpe, ce marquage consistant en un nombre de 3 trous (2), réalisés mécaniquement ou par tirs au laser à impulsions le plus près possible des zones à étudier;
b - une saisie digitalisation et stockage des images au nombre de 3 par coupes à savoir:
- l'image à étudier (image A)
- une image à plus faible grossissement de la même coupe dans la même position que pour l'image A et comportant au moins un des trous (2) de marquage (image B);
- une image au même grossissement que pour l'image B, mais permettant de visualiser tous les trous (2) de marquage (image C);
c- le repérage, par analyse numérique des images, des barycentres des trous de marquage (2) des images B et C et le calcul de leur positions relatives au sein de chaque image C;
d - le calcul, à partir des positions des barycentres des trous de marquage (2), d'une fonction de transformation inverse pour chaque coupe, corrigeant toutes les déformations et déplacements et composée de translations, rotations et d'une transformation, notamment d'une transformation affine du premier ordre à 6 paramètres;
e - une normalisation des images A en contraste et distribution des niveaux de gris par traitement numérique des images;
f - une registration- ou mise en concordance-, de la série des images A, par traitement numérique des images, consistant en l'application des fonctions de transformation inverses déterminées de la façon décrite en d ci-dessus.

2. Procédé selon la revendication 1, caractérisé en ce qu'il est appliqué au positionnement automatique, sur une zone donnée de coupes sériées (4), du faisceau de photons dans le cas d'un microscope optique, et du faisceau d'électrons dans le cas d'un microscope électronique à transmission, dont les mouvements de la platine porte-objet et les paramètres de contrôle sont gérés par ordinateur.

## Patentansprüche

1. Verfahren zur Korrelation von im Mikroskop (Transmission-Elektronenmikroskop oder optisches Mikroskop) beobachteten seriellen Schnitten (4), **gekennzeichnet durch**:
a) eine Markierung der Präparate vor dem Zuschneiden, wobei diese Markierung aus einer Anzahl von 3 Löchern (2) besteht, die mechanisch oder durch Impulslaser-Beschuß so nahe wie möglich zu den zu untersuchenden Bereichen hergestellt werden;
b) eine Erfassung, Digitalisierung und Speicherung einer Anzahl von 3 Bildern pro Schnitt, nämlich
- des zu untersuchenden Bildes (Bild A);
- eines Bildes von geringer Vergrößerung desselben Schnittes in der gleichen Position wie bei Bild A,und das mindestens eines der Löcher (2) der Markierung enthält (Bild B);
- eines Bildes in derselben Vergrößerung wie bei Bild B, in welchem aber alle Löcher (2) der Markierung sichtbar gemacht sind (Bild C);
c) die Positionsbestimmung - durch numerische Analyse der Bilder - der Zentren der Markierungslöcher (2) der Bilder B und C und die Berechnung ihrer relativen Positionen zur Mitte jedes Bildes C;
d) die Berechnung einer Rücktransformationsfunktion der Position der Zentren der Markierungslöcher (2) für jeden Schnitt, welche alle Verformungen und Verschiebungen korrigiert und aus Translationen, Rotationen und einer Transformation, insbesondere einer affinen Transformation erster Ordnung mi 6 Parametern zusammengesetzt ist;
e) eine Normierung der Bilder A im Kontrast und Verteilung der Graustufen durch numerische Verarbeitung der Bilder;
f) eine Registrierung - oder eine Korrelation - der Serie der Bilder A durch numerische Verarbeitung der Bilder, wobei die Rücktransformationsfunktionen, die nach der unter d) beschriebenen Weise bestimmt werden, Anwendung finden.

2. Verfahren nach Anspruch 1, **dadurch gekennzeichnet, daß** es zur automatischen Positionierung auf einem vorgegebenen Bereich serieller Schnitte (4) angewandt wird, mit einem Photonenstrahl im Falle eines optischen Mikroskops, und mit einem Elektronenstrahl im Falle eines Transmission-Elektronenmikroskops, bei dem die Bewegungen der Objektträgerplatte und die Steuerparameter computergestützt sind.

## Claims

1. A process for the registration of a series of sections (4) viewed with a (transmission electron or optical) microscope characterised by:
a - The marking of preparations before slicing, this marking consisting of 3 holes (2) produced mechanically or by hits by a pulsed laser, the pulses being applied as close as possible to the areas to be examined.
b - Data capture for digitisation and storage of 3 images per section, i.e.
- the image to be examined (image A);
- an image of the section at lower magnification in the same position as image A including at least one of the marking holes (2) (image B);
- an image at the same magnification as image B but showing all the marking holes (2) (image C);
c - identification, by digital analysis of the images, of the centres of mass of the marking holes (2) in images B and C and calculation of their relative positions in each image C;
d - calculation, on the basis of the positions of the centres of mass of the marking holes (2), of a reverse transformation function for each section to correct all the deformation, displacement, transposition components and rotation as well as, in particular, a 1st-order affine transformation with 6 parameters;
e - normalisation of images A in terms of contrast and distribution of grey scales by digital processing of the images;
f - registration of the series of images A by digital processing of the images consisting of applying reverse transformation functions determined as described above in d.

2. A process as claimed in Claim 1 characterised in that it is applied to the automatic positioning, in a given area of series of sections (4), of a photon beam in the case of an optical microscope and an electron beam in the case of a transmission electron microscope of which the movement of the stage and the control parameters are managed by a computer.
